# EUROPEAN PATENT SPECIFICATION

(11) **EP 0 387 396 B1**
(45) Date of publication and mention of the grant of the patent: **20.04.1994**
(21) Application number: 89115904.8
(22) Date of filing: 29.08.1989
(51) Int. Cl.: G05D 23/13

(54) **An electrically controlled mixing cock**
Elektrisch gesteuerte Mischarmatur
Robinet mélangeur à commande électrique

(30) Priority: 14.03.1989 FI 891208
(43) Date of publication of application: 19.09.1990
(73) Proprietor: ORAS OY, 26101 Rauma (FI)
(72) Inventor: Nilsson, Pekka Waldemar, F-26100 Rauma (FI); Rautavuori, Janne Tapio, F-26660 Rauma (FI)
(74) Representative: UEXKÜLL & STOLBERG

(56) References cited:
- EP-A- 0 184 824
- EP-A- 0 279 043
- DE-A- 3 211 188
- FR-A- 2 535 363

## Description

The present invention relates to an electrically controlled mixing cock, comprising at least two electric motors, one of which adjusts the amount of mixed water and the other the mixing ratio of cold water and hot water.

The use of such an electric control is prior known e.g. in spraying cocks, which can be simultaneously equipped with a thermostat.

FR-A-2 535 363 discloses an electrically controlled mixing cock for sanitary installations. The cock does not include a magnetic valve.

DE-A-3 211 188 discloses an electrically controlled set of two valves with a control member consisting of a lever.

The purpose of the present invention is to provide a cock application which is particularly suitable as a kitchen tap, being as handy as possible from the user's point of view.

In order to achieve this purpose, the mixing cock according to the invention is defined in claim 1.

The control member of the electric motors preferably consists of a lever acting on the position of the adjusting means, e.g. potentiometres. Correspondingly, the control member of the magnetic valve can consist of an on-off push-button or switch, to which is appropriately connected a signal light indicating the position of the magnetic valve.

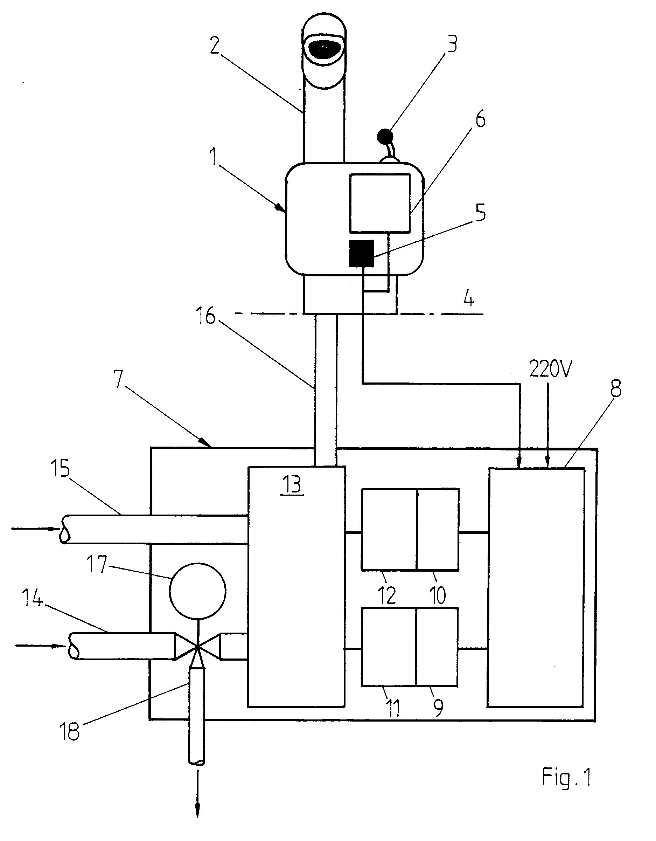

The invention and its other features are described in greater detail below as an example with reference to the enclosed drawing, in which figure 1 shows one embodiment of a mixing cock according to the invention, with its electric circuit as a block diagram, and

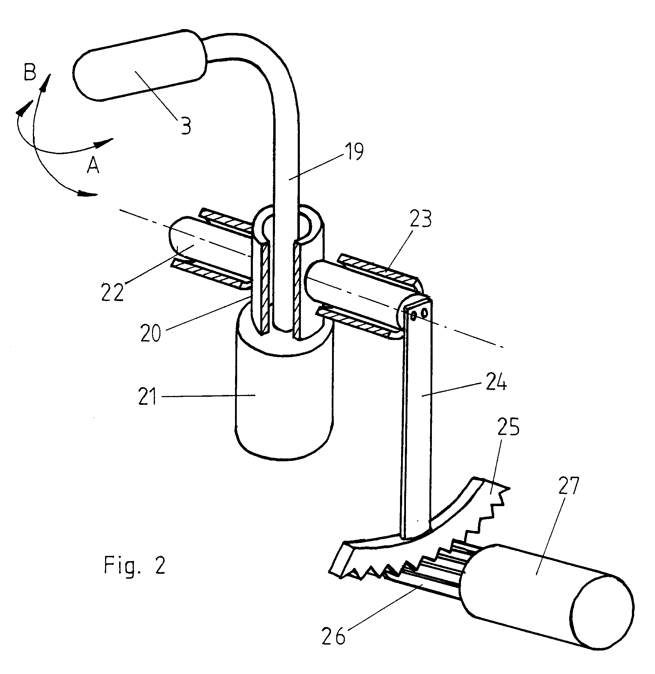

figure 2 one embodiment of the adjusting means of the mixing cock.

Above the fixing level S marked with a dotted line, a kitchen tap is attached, the body of which is generally indicated by the reference numeral 1. The cock comprises a revolving supply pipe 2 and a control lever 3, by means of which the amount of mixed water and the mixing ratio of cold and hot water are controlled.

In addition, the cock body 1 comprises the push-button 5, by means of which the water supply is connected to the washing-machine in the manner described below. The position of the push-button 5 is indicated by the position transmitter 6, which may simply consist of a signal light.

Below the fixing level 4, which then appropriately is the top of the kitchen sink unit, the cock mixing unit 7 is disposed. The mixing unit includes a central control element 8, which comprises an electronic card for controlling the motors as well as an adjustable magnetic valve timer, as described below. The adjusting element 13 may include e.g. two couples of ceramic plates, the mutual swivelling position of the first couple determining the mixing ratio of cold and hot water, and the mutual swivelling position of the second couple determining the total flow-through of mixed water. Such adjusting elements are previously well known and will not be described in detail here.

The swivelling position of the first plate couple is adjusted by the electric motor 12, to which the position sensor 10 is connected. The swivelling position of the second couple is correspondingly adjusted by the electric motor 11, to which the position sensor 9 is connected.

In the case described in the figure, the service pipe 18 leading to a washing-machine is connected with the cold water supply pipe 14 over a magnetic valve. The service pipe 18 could optionally be connected with the hot water supply pipe 15 or even with the mixed water outlet pipe 16.

When the push-button 5 of the magnetic valve in the body 1 is being pressed, the magnetic valve 17 opens up and connects the cold water with the supply water pipe 18 of the washing-machine. The signal light 6 indicates that the magnetic valve is open. In the control element 18, a magnetic valve timer is appropriately provided, which closes the magnetic valve automatically at the end of an adjustable lapse of time, e.g. 2 hours, from the opening moment.

In the arrangement described, the adjusting lever 3 does not directly transfer the mechanical components of the adjusting element 13, but it acts on revolving potentiometres, the positions of which, again, affect the adjusting element 13 over the control element 8 and the motors 11 and 12. Thus, the water pressures, temperatures or the operating life of the cock do not have any impact on the stiffness of the adjusting motions.

Figure 2 shows one embodiment of the adjusting lever 3, its movements being analogue with those of a "normal" lever cock.

When the lever 3 is turned sideways (curve A), the lever arm 19 mounted onto bearings in the sleeve 20 turns the potentiometre 21, by means of which the temperature adjusting motor 12 is acted on.

On the other hand, when the lever 3 is moved up-down (curve B), the arm 22 attached to the sleeve and mounted onto bearings in antoher sleeve 23 rotates, thus making another potentiometre 27 rotate over the lever arm 24 and the gear transmission 25, 26, by means of which the amount adjusting motor 11 is acted on.

The lever can, of course, be arranged in another manner, or separate control members can be provided for controlling the temperature, or respectively, the amount.

The control element 8 in figure 1 comprises appropriately all the necessary electronics, as well as a transformer and a rectifier to enable to connect the mixing unit 7 placed in an insulated sleeve directly with the power supply mains in the manner shown in the figure. Thus, passages are provided in the sleeve only for the pipes 14, 15, 16 and 18, as well as the flex and the control cable coming from the cock body.

## Claims

1. An electrically controlled mixing cock, comprising at least two electric motors (11, 12), one of which (11) adjusts the amount of mixed water and the other one (12) adjusts the mixing ration of cold and hot water, a mixing unit (7) of the cock including said motors (11, 12) being placed below the fixing level (4) of the cock, and control members (3, 5) of the electric motors (11, 12) provided in the cock body (1) above the fixing level, **characterized** in that the control member (3) of the electric motors (11, 12) consists of a lever which affects the positions of electric setting means, and that a magnetic valve (17) is provided in the mixing unit (7) to guide water into the service pipe (18) of a washing-machine.

2. A mixing cock according to claim 1, **characterized** in that the electric setting means are potentiometres (21, 27).

3. A mixing cock according to claim 1, **characterized** in that the control member of the magnetic valve (17) is an on-off push-button (5) or switch.

4. A mixing cock according to claim 3, **characterized** in that a signal light (6) indicating the position of the magnetic valve (17) is connected with the push-button (5) or switch.

5. A mixing cock according to any of the preceding claims, **characterized** in that the mixing unit (7) comprises essentially a closed sleeve of a special material, having passages for water pipes (14, 15, 16, 18) and electric wires, and in that the mixing unit (7) is connected with the power supply means and includes in addition to the motor control electronics a transformer with a rectifier.

## Patentansprüche

1. Elektrisch gesteuerter Mischhahn, bestehend aus mindestens zwei Elektromotoren (11, 12), von denen einer (11) die Menge des Mischwassers einstellt und der andere (12) das Mischungsverhältnis von Kalt- und Warmwasser, einer Mischeinheit (7) des Hahnes mit den Motoren (11,12), angeordnet unter einer festgelegten Höhe (4) des Hahnes und Steuerelementen (3, 5) der Elektromotoren (11, 12), angeordnet im Hahngehäuse (1) über der festgelegten Höhe, **dadurch gekennzeichnet,** daß das Steuerelement (3) der Elektromotoren (11, 12) aus einem Hebel besteht, der die Stellungen der elektrischen Einstellmittel beeinflußt und daß ein Magnetventil (17) in der Mischeinheit (7) vorgesehen ist, um das Wasser in das Anschlußrohr (18) einer Waschmaschine zu leiten.

2. Mischhahn nach Anspruch 1, **dadurch gekennzeichnet,** daß die elektrischen Einstellmittel Potentiometer (21, 27) sind.

3. Mischhahn nach Anspruch 1, **dadurch gekennzeichnet,** daß das Steuerelement des Magnetventils (17) ein Ein-Aus-Druckknopf (5) oder -Schalter ist.

4. Mischhahn nach Anspruch 3, **dadurch gekennzeichnet,** daß eine Anzeigelampe (6), die die Stellung des Magnetventils (17) anzeigt, mit dem Druckknopf (5) oder dem Schalter verbunden ist.

5. Mischhahn nach jedem der vorhergehenden Ansprüche, **dadurch gekennzeichnet,** daß die Mischeinheit (7) im wesentlichen aus einer geschlossenen Buchse aus einem speziellen Werkstoff mit Kanälen für die Wasserrohre (14, 15, 16, 18) und die elektrischen Kabel besteht und daß die Mischeinheit (7) mit den Stromversorgungsmitteln verbunden ist und zusätzlich zur Motorsteuerelektronik einen Transformator mit einem Gleichrichter einschließt.

## Revendications

1. Robinet mélangeur commandé électriquement, comprenant au moins deux moteurs électriques (11, 12), l'un (11) d'entre eux réglant la quantité d'eau mélangée et l'autre (12) réglant le rapport de mélange entre l'eau froide et l'eau chaude, un ensemble mélangeur (7) du robinet comprenant lesdits moteurs (11, 12) étant placé au-dessous du niveau de fixation (4) du robinet, et des organes de commande (3, 5) des moteurs électriques (11, 12) prévus dans le corps de robinet (1), au-dessus du niveau de fixation, caractérisé en ce que l'organe de commande (3) des moteurs électriques (11, 12) consiste en un levier qui modifie les positions de moyens de réglage électriques et en ce qu'une soupape magnétique (17) est prévuedans l'ensemble de mélange (7), pour guider l'eau dans le tuyau de branchement (18) d'une machine à laver.

2. Robinet mélangeur selon la revendication 1, caractérisé en ce que les moyens de réglage électriques sont des potentiomètres (21, 27).

3. Robinet mélangeur selon la revendication 1, caractérisé en ce que l'organe de commande de la soupape magnétique (17) est un bouton-poussoir ou un commutateur marche-arrêt (5).

4. Robinet mélangeur selon la revendication 3, caractérisé en ce qu'un voyant de signalisation (6), indiquant la position de la soupape magnétique (17), est connecté au bouton-poussoir ou commutateur (5).

5. Robinet mélangeur selon l'une quelconque des revendications précédentes, caractérisé en ce que l'ensemble mélangeur (7) comprend essentiellement un manchon fermé réalisé en un matériau spécial, présentant des passages pour des tuyaux à eau (14, 15, 16, 18) et des fils électriques, et en ce que l'ensemble mélangeur (7) est relié au moyen d'alimentation en puissance et comprend, outre les dispositifs électroniques de commande de moteur, un transformateur pourvu d'un redresseur.
